Europäisches Patentamt

European Patent Office

Office européen des brevets

(11) Veröffentlichungsnummer: **0 470 350 A2**

# (12) EUROPÄISCHE PATENTANMELDUNG

(21) Anmeldenummer: **91110298.6**

(22) Anmeldetag: **22.06.91**

(51) Int. Cl.5: **B23B** 39/16, B23C 1/08

(30) Priorität: **07.08.90 DE 4025007**
        **22.10.90 DE 4033520**

(43) Veröffentlichungstag der Anmeldung:
       **12.02.92 Patentblatt 92/07**

(84) Benannte Vertragsstaaten:
       **AT CH DE FR GB IT LI NL**

(71) Anmelder: **ADAPTRONIC AG**
       **Bodenackerstrasse 69**
       **CH-4657 Dulliken(CH)**

(72) Erfinder: **Prokopp, Manfred**
       **Am Felder 27**
       **W-6980 Wertheim-Reicholzheim(DE)**

(74) Vertreter: **Grosse, Rainer, Dipl.-Ing. et al**
       **Gleiss & Grosse Patentanwaltskanzlei**
       **Silberburgstrasse 187**
       **W-7000 Stuttgart 1(DE)**

(54) **Mehrspindelmaschine zum Bohren, Fräsen oder dergleichen.**

(57) Die Erfindung betrifft eine Mehrspindelmaschine zum Bohren, Fräsen oder dergleichen von Werkstücken, mit mehreren mindestens einer Traverse zugeordneten Spindeln, wobei Werkstücke und Spindeln relativ zueinander entlang von x- und/oder y-Koordinaten verfahrbar sind. Zur Minimierung der Bearbeitungszeit wird vorgeschlagen, daß jede Traverse (4) mindestens zwei Spindeln (3) aufweist, die unabhängig voneinander in Längsrichtung (x-Koordinate) der Traverse (4) verfahrbar sind.

Fig.1

Die Erfindung betrifft eine Mehrspindelmaschine zum Bohren, Fräsen oder dergleichen von Werkstücken, mit mehreren mindestens einer Traverse zugeordneten Spindeln, wobei Werkstücke und Spindeln relativ zueinander entlang von x- und y-Koordinaten verfahrbar sind.

Aus der Werkzeugmaschinentechnik sind CNCgesteuerte Präzisions-Mehrspindel-Bohr- und Konturenfräsmaschinen, z. B. zum Bearbeiten von Leiterplatten, Blechen usw. bekannt. Diese Maschinen besitzen mehrere, jeweils ein Werkzeug aufnehmende Spindeln. Werkstücke und Spindeln sind entlang von x- und y-Koordinaten relativ zueinander verfahrbar, so daß jeder gewünschte Punkt eines Arbeitstisches der Maschine angefahren werden kann. Ferner sind die Spindeln in z-Richtung absenkbar, um das Werkzeug in Richtung auf das Werkstück zu bewegen. Mit einer Mehrspindelanordnung besteht der Vorteil, daß gleichzeitig eine entsprechende Anzahl von Bearbeitungsvorgängen, zum Beispiel die Anfertigung von Bohrungen, durchgeführt werden kann. Hierzu sind die Spindeln relativ zueinander fest ausgerichtet.

In dieser vorgegebenen Position können sie gleichzeitig eingesetzt werden.

Derartige Mehrspindelmaschinen werden unter anderem für die Anfertigung von Platinen für gedruckte Schaltungen eingesetzt. Sie werden mit Bohrern bestückt, um Durchkontaktierungen und/oder Aufnahmelöcher für die Anschlußdrähte von elektronischen Bauelementen herzustellen.

Da die vorstehend genannten Werkstücke oftmals mit Tausenden von Bohrungen zu versehen sind, besteht der Wunsch nach einer Mehrspindelmaschine, die nur kurze Bearbeitungszeiten benötigt. Durch die Vielzahl der Spindeln der bekannten Maschinen lassen sich zwar mehrere Bohrungen gleichzeitig erstellen, also z. B. gleichzeitig mehrere identische Werkstücke an gleichen Stellen bohren, jedoch ist die Bearbeitungszeit für die Erstellung eines Werkstücks immer noch relativ lang.

Der Erfindung liegt daher die Aufgabe zugrunde, eine Mehrspindelmaschine der eingangs genannten Art zu schaffen, mit der in besonders kurzer Zeit eine Vielzahl von Bearbeitungsvorgängen durchgeführt werden kann.

Diese Aufgabe wird erfindungsgemäß dadurch gelöst, daß jede Traverse mindestens zwei Spindeln aufweist, die unabhängig voneinander in Längsrichtung der Traverse verfahrbar sind. Diese Erfindungsgemäße Ausbildung hat den Vorteil, daß gleichzeitig -zum Beispiel beim Einsatz von Bohrwerkzeugen- eine der Spindelzahl entsprechende Anzahl von Bohrungen gefertigt werden können, wobei jedoch die Relativstellung der einzelnen Spindeln zueinander nach jedem Bohrvorgang verändert werden kann. Insofern ist es möglich, daß die Spindeln in der eingestellten Relativposition gleichzeitig einen Bohrvorgang durchführen oder zum Beispiel eine oder mehrere der Spindeln gerade ihre Position verändern, während eine oder mehrere übrige Spindeln der Traverse eine Werkstückbearbeitung vornehmen. Hierdurch ist eine individuelle Werkstückbearbeitung, also mit individuellem Bohrungsmuster, in extrem kurzer Bearbeitungszeit möglich. So ist es u.a. möglich, daß mehrere Bohrungen mit derselben y-Koordinate gleichzeitig erstellt werden. Die einzelnen Spindeln können ferner individuell in ihrer z-Koordinate unabhängig voneinander zum jeweils gewünschten Zeitpunkt verfahren werden, so daß eine entsprechend gewollte Bohrungstiefe einstellbar ist.

Nach einer Weiterbildung der Erfindung ist vorgesehen, daß mindestens eine der Spindeln jeder Traverse relativ zu dieser quer zur Längsrichtung der Traverse verfahrbar ist. Hierdurch wird es möglich auch dann möglichst viele Spindeln gleichzeitig einzusetzen, wenn nur wenige Bohrungen auf einer sich parallel zur Längserstreckung der Traverse verlaufenden Achslinie liegen, jedoch in unmittelbarer Nähe dieser Achslinie auch Bohrungen zu fertigen sind. Die Positionierung der Traverse relativ zum Werkstück erfolgt dann so, daß alle innerhalb des durch die zusätzliche Querverstellung der Spindeln gebildeten Bandes liegende Bohrungen erreicht werden. Vorzugsweise kann vorgesehen sein, daß alle Spindeln einer Traverse diese zusätzliche Querverfahrbarkeit aufweisen.

Neben dieser Querverfahrbarkeit kann -nach einer Weiterbildung der Erfindung- auch vorgesehen sein, daß innerhalb eines kleinen Bereiches auch eine in Längsrichtung der Traverse mögliche Verfahrbarkeit -zusätzlich zu der Verfahrbarkeit an der Traversegegeben ist, das heißt, die an einem Schlitten oder dergleichen an der Traverse geführte Spindel kann mittels des Schlittens in eine bestimmte Position gebracht werden, wobei jedoch relativ zum Schlitten die Spindel sowohl in Querrichtung und/oder auch in Längsrichtung der Traverse verfahrbar ist. Diese Verfahrbarkeit in Längsrichtung kann zum Beispiel dazu benutzt werden, sehr eng nebeneinander liegende Bohrungen zu fertigen. Hierzu wird der an der Traverse geführte Schlitten zunächst in die Position einer Bohrung verbracht und diese Bohrung dann hergestellt. Anschließend wird nicht mehr der Schlitten an der Traverse verfahren, sondern es wird über die zusätzliche Verstellmöglichkeit der Spindel relativ zum Schlitten die weitere Position angefahren, so daß die benachbarte Bohrung hergestellt werden kann.

Für die Verfahrbarkeit der Spindel relativ zum Schlitten oder dergleichen ist eine Positioniereinrichtung vorgesehen. Diese Positioniereinrichtung -mit der nur kleine Verstellwege realisierbar sindkann beispielsweise als Piezo-Verstellelement ausgebildet sein. Alternativ ist es auch möglich, eine Positioniereinrichtung einzusetzen, die einen Mikro-Stellmotor aufweist.

Nach einer Weiterbildung der Erfindung ist eine Werkstückaufnahmevorrichtung vorgesehen, die quer zur Längserstreckung der feststehenden Traverse verfahrbar ist. Alternativ ist es auch möglich, daß die Werkstückaufnahmevorrichtung ortsfest angeordnet und die Traverse quer zu ihrer Längserstreckung verfahrbar ist. Hierdurch können die Spindeln und das Werkstück bzw. die Werkstücke relativ zueinander in Richtung der y-Koordinate verfahren werden. Die x-Koordinate jeder Spindel läßt sich dadurch verändern, daß sie in Richtung der Längserstreckung der Traverse verfahren wird.

Vorteilhaft ist es, wenn bei mehreren Traversen diese ebenfalls unabhängig voneinander verfahrbar sind. Mithin lassen sich die einzelnen Spindeln einer Traverse relativ und unabhängig voneinander und auch die verschiedenen Traversen relativ und unabhängig voneinander bewegen.

Nach einer Weiterbildung der Erfindung ist vorgesehen, daß jede Traverse und/oder jede Spindel mittels einer separaten Antriebseinrichtung verfahrbar ist. Die einzelnen Antriebseinrichtungen werden vorzugsweise von einer programmgesteuerten Steuereinrichtung angesteuert.

Die Antriebseinrichtungen können vorzugsweise als Linearmotoren ausgebildet sein. Hierbei ist es möglich, entlang der Traverse einen Ständer auszubilden und den einzelnen Spindeln je einen Läufer zuzuordnen, der entlang des Ständers verfahrbar ist. Entsprechendes gilt für die Verfahrbarkeit der Traversen. Beispielsweise ist feststehend zum Arbeitstisch eine Ständeranordnung der Linear-Antriebseinrichtungen ausgebildet und an den Traversen jeweils eine Läuferausbildung vorgesehen. Alternativ ist es jedoch auch möglich, daß die Traversen und/oder Spindeln mit konventionellen Mitteln verfahrbar sind; beispielsweise mittels Servomotoren und geeigneten mechanischen Übertragungsmitteln, zum Beispiel Gewindespindeln. Um eine hohe Positioniergenauigkeit und auch Wiederholgenauigkeit der Position zu erreichen, erfolgt die Positionierung der Spindeln und/oder Traversen jeweils mittels eines Positionier-Regelkreises, der seinen jeweiligen Istwert zum Beispiel über ein Heidenhain-Linear-Meßsystem mit Glasstab erhält.

Nach einer Weiterbildung der Erfindung kann vorgesehen sein, daß die Spindeln derart angeordnet sind, daß mit ihnen das Werkstück insbesondere gleichzeitig von der Vorder- und Rückseite bearbeitet werden kann. Hierdurch ist es insbesondere möglich, gleichzeitig von verschiedenen Seiten des Werkstücks aus Bohrungen auszubilden, die derart dicht zusammenliegen können, daß sie von den auf einer Seite des Werkstücks liegenden Spindeln gar nicht gleichzeitig herstellbar sind, da die Spindeln dabei gegeneinander fahren würden. Bei der gleichzeitigen Bearbeitung von Vorder- und Rückseite kann dies nicht passieren, da dann lediglich die Bohrerdurchmesser den minimalsten Abstand der Spindeln bestimmen.

Zur Befestigung eines Werkstücks oder mehrerer Werkstücke ist eine Werkstückaufnahmevorrichtung vorgesehen. Diese kann derart ausgebildet sein, daß die Werkstücke, zum Beispiel Platinen, in vertikaler Position gehalten werden. Dies hat den Vorteil, daß es aufgrund der Schwerkraft nicht zum Durchbiegen der Platinen kommt. Bei einer einseitigen und/oder beidseitigen Werkstückbearbeitung sind dann die einzelnen Spindeln mit horizontal verlaufenden Drehachsen angeordnet.

Für besonders kurze Bearbeitungszeiten können einer oder beiden Werkstückseiten jeweils mehrere Traversen zugeordnet sein.

Bevorzugt steuert die -bereits erwähnte- Steuereinrichtung die Antriebseinrichtungen derart an, daß die Spindeln kollisionsfrei möglichst kurze Wege von Bearbeitungsvorgang zu Bearbeitungsvorgang zurücklegen. Hierdurch wird die Bearbeitungszeit noch einmal verkürzt.

Besonders bevorzugt ist es, wenn die Antriebseinrichtungen von der Steuereinrichtung derart angesteuert werden, daß entweder ein Werkstück gleichzeitig mit mehreren Spindeln bearbeitet wird oder gleichzeitig mehrere Werkstücke mit je einer Spindel bearbeitet werden oder gleichzeitig mehrere Werkstücke mit jeweils mehreren Spindeln bearbeitet werden. Diese Möglichkeiten eröffnen eine besonders umfangreiche Einsatzvielfalt bei stets kurzen Bearbeitungszeiten.

Besonders vorteilhaft ist es, wenn die Mehrspindelmaschine eine optische Einrichtung zur Erfassung der Werkstückposition aufweist. Zur Erfassung der Werkstückposition ermittelt die optische Einrichtung die Lage einer Markierung oder dergleichen des Werkstücks. Die Positionsdaten werden der Steuereinrichtung zugeleitet. Mithin erhält die Steuereinrichtung Informationen über die Werkstückposition. Die Steuereinrichtung steuert die Antriebseinrichtungen zur Positionierung der Spindeln demgemäß unter Berücksichtigung der ermittelten Werkstückposition an. Dies hat den Vorteil, daß aufwendige mechanische Einrichtungen, die die Werkstücke automatisch der Mehrspindelmaschine in einer genau vorgegebenen Position zuführen, entfallen können. Vielmehr sind wesentlich einfachere Zuführvorrichtungen verwendbar, da es auf die genaue Positionierung des Werkstücks nicht ankommt. Die Werkstücke werden daher in der jeweils zugeführten Stellung festgespannt. Anschließend ermittelt die optische Einrichtung die individuelle Werkstückposition durch optische Abtastung einer Markierung des Werkstücks. Handelt es sich beispielsweise bei dem Werkstück um eine Leiterplatte, die gebohrt werden soll, so kann diese ein Markierungskreuz aufweisen oder es werden zum Beispiel die Koordinaten einer Längs- und einer Querseite der Leiterplatten zur Positionsbestimmung ermittelt. Die so aufgenommenen Koordinaten werden bei der Ansteuerung, das heißt, bei der Positionierung der Spindeln und/oder der Traverse und/oder der Werkstückaufnahmevorrichtung berücksichtigt. Die Werkstückkoordinaten werden somit softwaremäßig bei der Berechnung der Bearbeitungskoordinaten (zum Beispiel Bohrkoordinaten) berücksichtigt. Das Bearbeitungsverfahren wird dadurch erheblich vereinfacht.

Die Zeichnung veranschaulicht die Erfindung anhand von Ausführungsbeispielen und zwar zeigt:

Figur 1 eine Draufsicht auf einen Arbeitstisch einer erfindungsgemäßen Mehrspindelmaschine in schematischer Darstellung,

Figur 2 eine Seitenansicht entlang der Linie II-II in Figur 1,

Figur 3 eine Draufsicht auf ein weiteres Ausführungsbeispiel und

Figur 4 eine Draufsicht auf einen Teilbereich eines weiteren Ausführungsbeispiels entsprechend Figur 1.

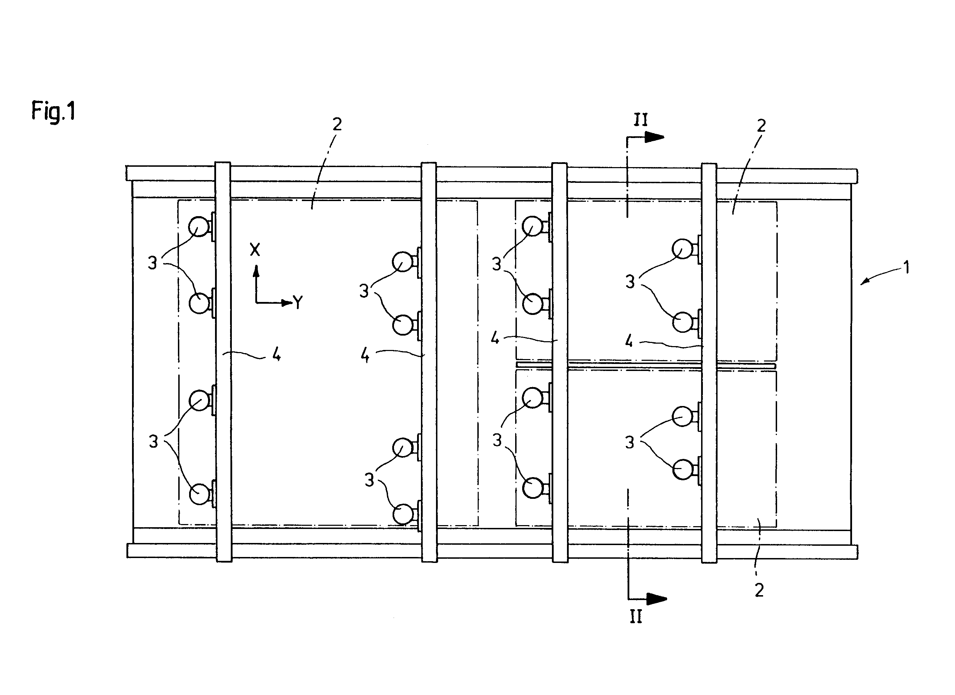

Die Figur 1 zeigt schematisch eine Draufsicht auf den Arbeitstisch 1 einer Mehrspindelmaschine zum Bohren, Fräsen oder dergleichen. Es sind nur die für die Erfindung wesentlichen Komponenten dargestellt. Insofern sind ebenfalls für die Funktion dieser Maschine erforderliche, jedoch für die Erfindung unwesentliche Teile weggelassen.

Auf dem Arbeitstisch 1 sind Werkstücke 2 aufgespannt. Bei den Werkstücken handelt es sich um Adapterplatten, die mit Bohrungen zur Aufnahme von Federkontaktstiften zu versehen sind. Diese Bohrungen werden mittels Spindeln 3 (Bohrspindeln) eingebracht, die mit entsprechenden Spannfuttern zur Aufnahme von Bohrern versehen sind und jeweils einen Antrieb für die Rotationsbewegung aufweisen. Die einzelnen Spindeln 3 sind längs verfahrbar an Traversen 4 gelagert. Insofern besteht eine Verfahrbarkeit in Richtung einer x-Koordinate (siehe Figur 1).

Erfindungsgemäß sind mehrere Spindeln 3 an jeder Traverse 4 vorgesehen, die unabhängig voneinander in Längsrichtung der jeweiligen Traverse 4 verfahrbar sind. Im Ausführungsbeispiel der Figur 1 sind vier Spindeln 3 je Traverse 4 vorgesehen. Das in Figur 1 wiedergegebene Ausführungsbeispiel weist ferner vier Traversen 4 auf, so daß sich insgesamt sechzehn Spindeln 3 ergeben. Die einzelnen Traversen 4 sind quer, insbesondere senkrecht zur x-Koordinate in Richtung einer y-Koordinate der Figur 1 verfahrbar. Die Erfindung ist natürlich nicht auf diese beispielhafte Anzahl von Spindeln 3 je Traverse 4 bzw. auf die angegebene Anzahl der Traversen 4 begrenzt.

Jeder Spindel 3 jeder Traverse 4 ist eine separate Antriebseinrichtung (nicht dargestellt) zugeordnet, so daß die einzelnen Spindeln 3 in Richtung der x-Koordinate unabhängig voneinander verfahrbar sind. Ferner weist jede Traverse 4 eine separate Antriebseinrichtung (nicht dargestellt) auf, so daß die einzelnen Traversen 4 in Richtung der y-Koordinate unabhängig voneinander verfahren werden können. Die Steuerung der Positionierung der Traversen 4 und Spindeln 3 übernimmt eine nicht dargestellte Steuereinrichtung, die die Antriebseinrichtung ansteuert.

Die Antriebseinrichtungen können konventionell mit Regelkreis versehene Servomotoren aufweisen, die über entsprechende mechanische Kupplungsglieder mit den Spindeln 3 bzw. Traversen 4 verbunden sind oder -nach einem bevorzugten Ausführungsbeispiel- auch als Linearmotoren ausgebildet sein. Im letzteren Fall weist der Arbeitstisch 1 eine Statoranordnung auf und die einzelnen Traversen 4 sind mit Läufereinrichtungen der Linearmotoren versehen. Gleiches gilt für die Spindeln 3, das heißt, jede Traversen 4 weist eine Statoreinrichtung auf und die Spindeln 3 sind mit Läufereinrichtungen der Linearmotoren versehen. Um stets die richtige Traverse 4 bzw. die gewünschte Spindel 3 verfahren zu können, kann vorzugsweise eine Codeansteuerung vorgesehen sein.

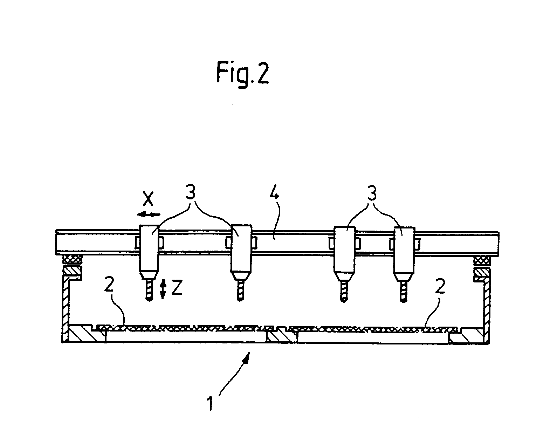

Aus der Figur 2 wird deutlich, daß der Werktisch 1 horizontal ausgerichtet ist und die Bearbeitung des oder der Werkstücke 2 von oben her erfolgt. Nach einem nicht dargestellten Ausführungsbeispiel ist es jedoch auch möglich, daß die Bearbeitung sowohl von der Vorder- als auch von der Rückseite des Werkstücks vorgenommen wird, das heißt, beidseitig des Werkstücks 2 sind Traversen 4 mit Spindeln 3 ausgebildet. Insbesondere kann dabei überdies vorgesehen sein, daß die Werkstückaufnahmevorrichtung derart ausgebildet ist, daß das oder die Werkstücke 2 in vertikaler Position gehalten werden, das heißt, der Arbeitstisch 1 liegt in einer vertikalen Ebene. Dabei liegt eine entsprechende Spindelanordnung mit horizontalen Drehachsen vor.

Die bereits erwähnte Steuereinrichtung steuert die Antriebseinrichtungen für die Traversen 4 und die Spindeln 3 derart an, daß möglichst kurze Wege von Bearbeitungsvorgang zu Bearbeitungsvorgangs zurückzulegen sind, wodurch sich besonders kurze Bearbeitungszeiten ergeben. Aus der Figur 1 wird deutlich, daß das Programm der Steuereinrichtung die Antriebseinrichtungen derart ansteuern kann, daß ein Werkstück 2 gleichzeitig mit mehreren Spindeln 3 bearbeitet wird oder daß gleichzeitig mehrere Werkstücke 2 mit jeweils einer Spindel 3 bearbeitet werden oder daß gleichzeitig mehrere Werkstücke 2 jeweils mit mehreren Spindeln 3 bearbeitet werden, wobei in jedem Falle jedem Werkstück 2 wiederum entweder eine Traverse oder aber mehrere Traversen 4 zugeordnet sein können.

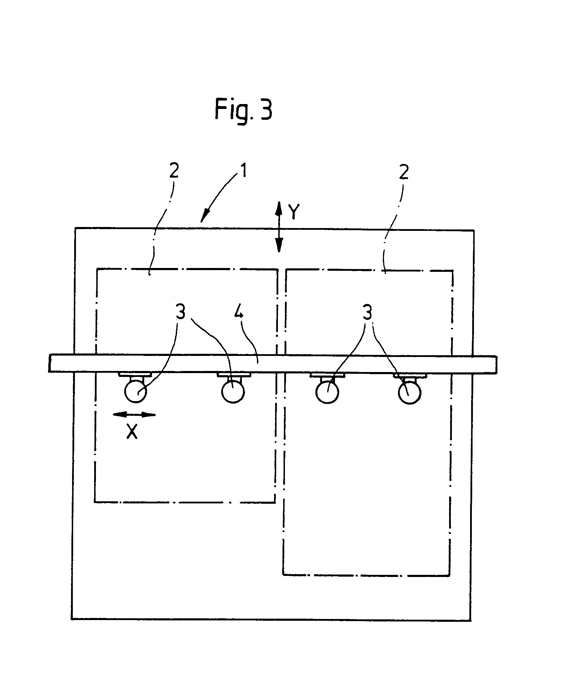

Die Figur 3 zeigt ein weiteres Ausführungsbeispiel einer erfindungsgemäßen Mehrspindelmaschine, die sich gegenüber dem Ausführungsbeispiel der Figur 1 darin unterscheidet, daß die Traverse 4 ortsfest zum Maschinengestell angeordnet ist. Die Werkstückaufnahmevorrichtung, also der Arbeitstisch 1, ist in Richtung der y-Koordinate verfahrbar. An der Traverse 4 sind vier Spindeln 3 angeordnet, die in der x-Koordinate relativ und unabhängig voneinander verfahrbar sind. In einer bestimmten Arbeitstischposition können sämtliche Bohrungen von z. B. zwei Werkstücken 2 gefertigt werden, die auf einer y-Koordinate liegen. Ist dies erfolgt, so wird die nächste y-Koordinate angesteuert und wiederum sämtliche Bohrungen gefertigt, die auf dieser Koordinate liegen usw..

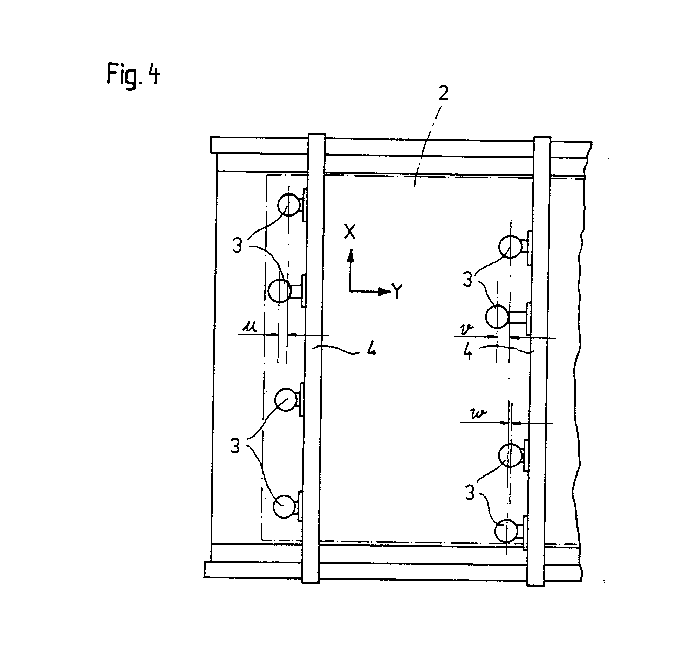

Die Figur 4 zeigt ein weiteres Ausführungsbeispiel der Erfindung, das sich -gegenüber dem Ausführungsbeispiel der Figur 1- dadurch unterscheidet, daß die einzelnen Spindeln 3 jeder Traverse 4 nicht nur in Richtung der x-Koordinate, sondern auch in Richtung der y-Koordinate relativ zur Traverse 4 verfahrbar ist. Mithin läßt sich jede Traverse 4 relativ zum Werkstück 2 in Richtung der y-Koordinate verfahren, indem entweder das Werkstück 2 feststeht und die Traverse 4 verfahren wird oder die Traverse 4 feststeht und das Werkstück 2 verfahren wird oder das Werkstück 2 und Traverse 4 zueinander verfahren werden. Die einzelnen Spindeln 3 sind in Richtung der x-Koordinate an der Traverse 4 verfahrbar. Darüberhinaus ist es überdies möglich, jede Spindel 3 quer zur Längsrichtung der Traverse 4 relativ zur Traverse 4 zu verfahren, so daß die einzelnen Spindeln 3 jeder Traverse 4 nicht auf einer gemeinsamen y-Koordinate, sondern auf unterschiedlichen y-Koordinaten legen. Beispielsweise können die einzelnen Spindeln 3 jeder Traverse 4 in Richtung einer y-Koordinate einen Abstand u beziehungsweise v beziehungsweise w aufweisen (Figur 4). Mithin wird ohne Stellungsveränderung der Traverse 4 in Richtung der y-Koordinate ein Band abgedeckt. Insofern besteht die Möglichkeit, möglichst viele Spindeln 3 einer Traverse 4 gleichzeitig einzusetzen, auch wenn die zu fertigenden Bohrungen nicht alle genau auf einer y-Koordinate, sondern innerhalb des erwähnten Bandes liegen. Hierzu wird die Traverse 4 relativ zum Werkstück 2 derart ausgerichtet, daß sämtliche Bohrpositionen erreicht werden können, wobei die zusätzliche Verstellmöglichkeit in Richtung der y-Koordinate genutzt wird. Es läßt sich damit eine optimale Auslastung und damit eine zusätzliche Reduzierung der Bohrzeit erreichen. Damit ist die Wahrscheinlichkeit, daß gleichzeitig alle Spindeln 3 einer Traverse 4 zum Einsatz kommen, wesentlich erhöht. Vorzugsweise lassen sich die Spindeln 3 senkrecht zur Längserstreckung der zugehörigen Traverse 4 verfahren. Hierzu sind zusätzliche Positioniereinrichtungen (nicht dargestellt) erforderlich. Diese ermöglichen es, die jeweilige Spindel 3 relativ zu einem an der Traverse 4 geführten Schlitten oder dergleichen zu verfahren. Diese Positioniereinrichtung kann beispielsweise als Piezo-Verstellelement oder auch als Mikro-Verstellmotor oder dergleichen ausgebildet sein.

Nach einem bevorzugten Ausführungsbeispiel der Erfindung weist die Mehrspindelmaschine eine automatisch arbeitende, optische Einrichtung zur Erfassung der Werkstückposition auf. Auch können die Positionen mehrerer Werkstücke erfaßt werden. Dies hat den Vorteil, daß die Werkstücke einer Bearbeitungsserie nicht alle in gleicher Position, sondern individuell festgespannt werden können. Durch die Werkstückpositionserfassung ist es -trotz unterschiedlicher Lage der Werkstücke- dennoch möglich, jeweils exakt die Bearbeitung vorzunehmen, da die Positionskoordinaten in die Bearbeitungssoftware eingerechnet werden, das heißt, unterschiedliche Werkstückpositionen werden bei den Bohrkoordinaten der einzelnen Spindeln berücksichtigt.

**Patentansprüche**

1. Mehrspindelmaschine zum Bohren, Fräsen oder dergleichen von Werkstücke, mit mehreren mindestens einer Traverse zugeordneten Spindeln, wobei Werkstücke und Spindeln relativ zueinander entlang von x- und/oder y-Koordinaten verfahrbar sind, **dadurch gekennzeichnet**, daß jede Traverse (4) mindestens zwei Spindeln (3) aufweist, die unabhängig voneinander in Längsrichtung (x-Koordinate) der Traverse (4) verfahrbar sind.

2. Mehrspindelmaschine nach Anspruch 1, **dadurch gekennzeichnet**, daß mindestens eine der Spindeln (3) jeder Traverse (4) relativ zu dieser quer zur Längsrichtung der Traverse (4) verfahrbar ist.

3. Mehrspindelmaschine nach einem der vorhergehenden Ansprüche, **dadurch gekennzeichnet**, daß die Spindel (3) relativ zu einem an der Traverse (4) geführten Schlitten oder dergleichen mittels einer Positioniereinrichtung quer zur Längsrichtung der Traverse (4) verfahrbar ist.

4. Mehrspindelmaschine nach einem der vorher-

gehenden Ansprüche, **dadurch gekennzeich-net**, daß die Spindel (3) senkrecht zur Längsrichtung der Traverse (4) verfahrbar ist.

5. Mehrspindelmaschine nach einem der vorher-gehenden Ansprüche, **dadurch gekennzeich-net**, daß die Positioniereinrichtung als Piezo-Verstellelement ausgebildet ist.

6. Mehrspindelmaschine nach einem der vorher-gehenden Ansprüche, **dadurch gekennzeich-net**, daß die Positioniereinrichtung einen Mikro-Stellmotor für kleine Verstellwege aufweist.

7. Mehrspindelmaschine nach einem der vorhergehenden Ansprüche, **gekennzeichnet durch** eine Werkstückaufnahmevorrichtung, die quer (y-Koordinate) zur Längserstreckung der feststehenden Traverse (4) verfahrbar ist.

8. Mehrspindelmaschine nach einem der vorher-gehenden Ansprüche, **dadurch gekennzeich-net**, daß die Werkstückaufnahmevorrichtung ortsfest angeordnet und die Traverse (4) quer (y-Koordinate) zu ihrer Längserstreckung verfahrbar ist.

9. Mehrspindelmaschine nach einem der vorher-gehenden Ansprüche, **dadurch gekennzeich-net**, daß bei mehreren Traversen (4) diese unabhängig voneinander verfahrbar sind.

10. Mehrspindelmaschine nach einem der vorher-gehenden Ansprüche, **dadurch gekennzeich-net**, daß jede Traverse (4) und/oder jede Spindel (3) mittels einer separaten Antriebseinrichtung verfahrbar ist.

11. Mehrspindelmaschine nach einem der vorher-gehenden Ansprüche, **dadurch gekennzeich-net**, daß die Antriebseinrichtungen als Linearmotoren ausgebildet sind.

12. Mehrspindelmaschine nach einem der vorher-gehenden Ansprüche, **dadurch gekennzeich-net**, daß die Antriebseinrichtungen Servomoto-ren aufweisen.

13. Mehrspindelmaschine nach einem der vorher-gehenden Ansprüche, **dadurch gekennzeich-net**, daß die Spindeln (3) derart angeordnet sind, daß mit ihnen das Werkstück (2) bzw. die Werkstücke (2) insbesondere gleichzeitig von der Vorder- und Rückseite bearbeitet werden kann bzw. können.

14. Mehrspindelmaschine nach einem der vorhergehenden Ansprüche, **gekennzeichnet durch** eine das Werkstück (1) in vertikaler Position haltende Werkstücksaufnahmevorrichtung.

15. Mehrspindelmaschine nach einem der vorher-gehenden Ansprüche, **dadurch gekennzeich-net**, daß die Spindeln mit horizontal verlaufenden Drehachsen angeordnet sind.

16. Mehrspindelmaschine nach einem der vorher-gehenden Ansprüche, **dadurch gekennzeich-net**, daß einer oder beiden Werkstückseiten jeweils mehrere Traversen (4) zugeordnet sind.

17. Mehrspindelmaschine nach einem der vorhergehenden Ansprüche, **gekennzeichnet durch** eine Steuereinrichtung, die die Antriebseinrichtungen derart ansteuert, daß die Spindeln (3) kollisionsfrei möglichst kurze Wege von Bear-beitungsvorgang zu Bearbeitungsvorgang zu-rücklegen.

18. Mehrspindelmaschine nach einem der vorher-gehenden Ansprüche, **dadurch gekennzeich-net**, daß die Antriebseinrichtungen von der Steuereinrichtung derart angesteuert werden, daß ein Werkstück (2) gleichzeitig mit mehreren Spindeln (3) bearbeitet wird oder gleichzeitig mehrere Werkstücke (2) mit je einer Spindel (3) bearbeitet werden oder gleichzeitig mehrere Werkstücke (2) mit jeweils mehreren Spindeln (3) bearbeitet werden.

19. Mehrspindelmaschine nach einem der vorhergehenden Ansprüche, **gekennzeichnet durch** eine optische Einrichtung zur Erfassung der Werkstückposition.

20. Mehrspindelmaschine nach einem der vorher-gehenden Ansprüche, **dadurch gekennzeich-net**, daß die optische Einrichtung zur Erfassung der Werkstückposition die Lage einer Markierung oder dergleichen des Werkstücks (2) ermittelt und der Steuereinrichtung Informationen über die Werkstückposition zuleitet.

21. Mehrspindelmaschine nach einem der vorher-gehenden Ansprüche, **dadurch gekennzeich-net**, daß die Steuereinrichtung die Antriebseinrichtungen zur Positionierung der Spindeln (3) unter Berücksichtigung der ermittelten Werk-stückposition ansteuert.

Fig.1

EP 0 470 350 A2

# Fig.2

# Fig. 3

Fig. 4